Europäisches Patentamt

European Patent Office

Office européen des brevets

(11) Publication number: **0 507 011 A1**

# EUROPEAN PATENT APPLICATION

(21) Application number: **91200778.8**

(22) Date of filing: **04.04.91**

(51) Int. Cl.⁵: **A01J 11/16**, B01F 5/06

(43) Date of publication of application:
**07.10.92 Bulletin 92/41**

(84) Designated Contracting States:
**CH DE ES FR GB IT LI NL**

(71) Applicant: **Hoogovens Industrial Ceramics B.V.**
**P.O. Box 10.000**
**NL-1970 CA Ijmuiden(NL)**

(72) Inventor: **de Haan, Cornelis Franciscus Jacobus**
**Roosje Vosstraat 23**
**NL-1963 CP Heemskerk(NL)**

(74) Representative: **Van Breda, Jacobus, Mr. Ir. et al**
**HOOGOVENS GROEP BV P.O. Box 10.000**
**NL-1970 CA IJmuiden(NL)**

(54) **Apparatus for processing a liquid substance.**

(57) Apparatus for processing a liquid substance, in particular a foodstuff, which apparatus comprises a seat (4) and a valve (3), the latter being suitable for acting together with the seat (4), whereby during operation the liquid substance is forced through between the valve (3) and the seat (4), whereby the seat (4) and at least the part of the valve (3) which during operation comes close to the seat (4), and in certain applications an impinging ring (5) in the vicinity of the valve's seat (4) consist of advanced ceramic material.

Fig. 1

The invention relates to an apparatus for processing a liquid substance, in particular a foodstuff, which apparatus comprises a seat and a valve, the latter being suitable for acting together with the seat, whereby during operation the liquid substance is forced through between the valve and the seat.

Such an apparatus is known for example from the milk-processing industry and is utilized as homogenizing element. An example of such is British patent application GB 2 070 449. This element serves to spread out the globules of fat present in the raw milk in order to obtain homogenized milk.

The apparatus which is the subject of this application is also known as crushing head and is used as such in the preparation of fruit and vegetable juices such as ketchup. The ketchup which is forced through between the valve and the seat of the crushing head is subjected to a physical change increasing the viscosity thereof, thus making it difficult for the finished ketchup to flow out of the bottle.

For such apparatuses it is known to use steel valves and seats. Reference is made to the German Offenlegungsschrift DE 37 28 946 which acknowledges the above application in the dairy-industry but is concerned with another problem connected to biotechnical applications. According to DE 37 28 946 it is difficult to apply high-pressures (800 bar) in combination with low flows of the liquid to be processed, without quickly damaging the homogeniser and deteriorating the performance of the apparatus. DE 37 28 946 therefore proposes the application of diamond-layers sintered to the underlying metal parts of the homogeniser. The instant application is however concerned with the earlier-mentioned applications within the food-processing industries, whereby pressures in the range of 200-400 bar are applied and the liquid-flow may amount approximately 10.000 l/hr.

The problem with such apparatuses is that their service life is limited to approximately four weeks operating time. After that time the crushing head or homogenizing element is for the most part worn out whereby the intended effect no longer exists. Homogenizing of the milk, or increasing of viscosity of the ketchup becomes steadily poorer whereby the processed product does not meet quality standards. Moreover, the product being processed becomes contaminated by undesired worn-off iron particles.

The aim of the invention is now to provide a solution to these long standing problems. To this end the apparatus in accordance with the invention is characterized in that the seat and at least the part of the valve which during operation comes close to the seat consists of advanced ceramic material. In this connection advanced ceramic material can also be referred to as engineering ceramics or structural ceramics. It is remarked that the chemical structure and in consequence thereof the physical properties of ceramic material are quite distinct as compared to a diamond layer as taught by DE 37 28 946. Quite surprisingly though, it has been found that the apparatus according to the invention displays less wear than the known apparatus intended for similar applications and operating under comparable conditions. Moreover, the apparatus according to the invention proves to show better resistance against the abrasive properties of cleansing means. The apparatus in accordance with the invention does not display any visible signs of wear after a period of operation of four weeks, but provides for continued successful operation for a period of several months depending on the type of liquid to be processed. Also contamination of the product being processed is largely non-existent. Maintenance costs are correspondingly very low.

A number of demands, some conflicting are imposed on the ceramic material to be used. In accordance with the invention it is desirable that, in combination, the advanced ceramic material satisfies the following characteristics:

- hardness greater than approximately 1500 Vickers
- E-modulus less than approximately 315 GPa
- bending strength higher than approximately 600 MPa, and preferably higher than approximately 800 MPa.

It is preferable that the advanced ceramic material is capable of resisting a thermal shock of more than 130 °C so as to allow for easy and quick cleansing action for instance utilizing steam.

Particularly good results with all the above objects are obtained if the advanced ceramic material is one from the group consisting of zirconia, sialon, silicon nitride.

For particular applications such as for treatment of milk or drinking-chocolate use is made of an impinging ring in the vicinity of the valve's seat. In a certain aspect of the invention said impinging ring is made of advanced ceramic material. This gives particular good results as compared to the known apparatus with an impinging ring of hardened steel.

The invention will now be illustrated by reference to the drawing.

Fig. 1 shows the apparatus in accordance with the invention in cross-section as used as homogenizing element for milk.

Fig. 2 shows the apparatus in accordance with the invention in cross-section as used as crushing head for processing ketchup.

The invention is deemed not to be limited to the example embodiments shown in the figures. In the figures the same numbers refer to corresponding parts of the apparatus.

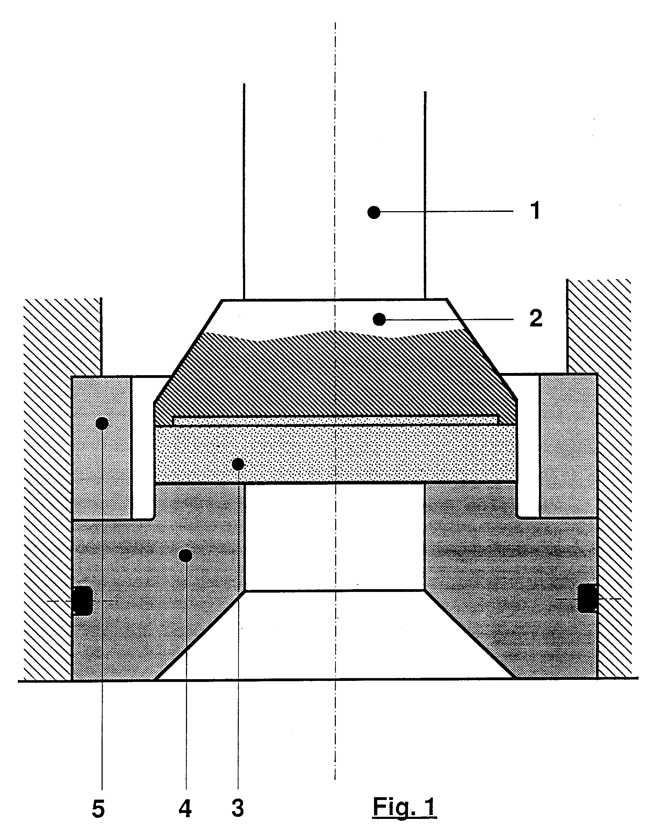

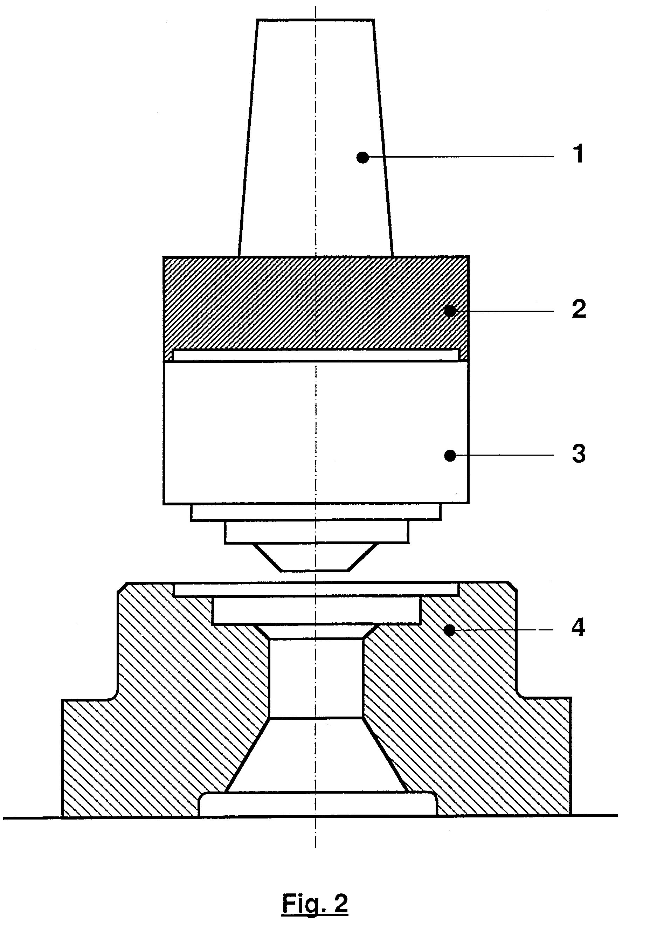

The active part of the homogenizing element of Fig. 1 and the crushing head of Fig. 2 is the valve seat (4) and the valve base (3) acting together. Valve base (3) and valve seat (4) are made of advanced ceramic material preferably chosen from the group consisting of zirconia, sialon, silicon nitride, whereby these satisfy the following characteristics:

- hardness greater than approximately 1500 Vickers
- E-modulus less than approximately 315 GPa
- bending strength higher than approximately 600 MPa, preferably higher than approximately 800 MPa.

Any of these ceramic materials are capable to resist a thermal shock of more than 130 °C.

Valve base (3) is held in a steel valve holder (2) which is connected to a mandrel (1). This mandrel (1) serves to operate the valve.

During operation the space between valve base (3) and valve seat (4) is only a few hundredths of a millimetre and the pressure exerted on this gap is approximately 200-400 bar. As shown in Fig. 1 it may be considered to fit an impinging ring (5) on the side where the foodstuff is forced out and which is also made of advanced ceramic material as named above or of other types of ceramic material, such as alumina or silicon carbide. The valve base (3) may have a variety of shapes as shown by Fig. 2 as distinct from Fig. 1. Naturally the shape of the valve seat (4) must be matched to the shape of valve base (3).

## Claims

1. Apparatus for processing a liquid substance, in particular a foodstuff, which apparatus comprises a seat (4) and a valve, the latter being suitable for acting together with the seat (4), whereby during operation the liquid substance is forced through between the valve (3) and the seat (4), characterized in that the seat (4) and at least the part (3) of the valve which during operation comes close to the seat (4), consists of advanced ceramic material.

2. Apparatus in accordance with Claim 1, characterized in that, in combination, the advanced ceramic material satisfies the following characteristics:
   - hardness greater than approximately 1500 Vickers
   - E-modulus less than approximately 315 GPa
   - bending strength higher than approximately 600 MPa.

3. Apparatus according to claim 1 or 2, characterized in that the bending strength is higher than approximately 800 MPa.

4. Apparatus according to Claim 1, 2 or 3, characterized in that the advanced ceramic material is capable of resisting a thermal shock of more than 130 °C.

5. Apparatus in accordance with anyone of Claims 1-4, characterized in that the advanced ceramic material is one from the group consisting of zirconia, sialon, silicon nitride.

6. Apparatus in accordance with anyone of Claims 1-5, whereby the apparatus further comprises an impinging ring in the vicinity of the valve's seat, characterized in that said impinging ring (5) consists of advanced ceramic material.

<u>Fig. 1</u>

**Fig. 2**

European Patent Office

**EUROPEAN SEARCH REPORT**

Application Number

EP 91 20 0778

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,X | DE-A-3 728 946 (BRAN + LUEBBE GMBH)<br>* column 3, line 17 - line 43; claims 1-2; figure 2 * | 1 | A01J11/16<br>B01F5/06 |
| A | | 2-6 | |
| | --- | | |
| D,A | GB-A-2 070 449 (VICKERS LIMITED)<br>* abstract; figure * | 1 | |
| | ----- | | |

TECHNICAL FIELDS
SEARCHED (Int. Cl.5 )

A01J
B01F

The present search report has been drawn up for all claims

| Place of search | Date of completion of the search | Examiner |
|---|---|---|
| THE HAGUE | 24 OCTOBER 1991 | NEHRDICH H.J. |

EPO FORM 1503 03.82 (P0401)